# EUROPÄISCHE PATENTANMELDUNG

(11) **EP 3 992 507 A1**
(43) Veröffentlichungstag der Anmeldung: **04.05.2022**
(21) Anmeldenummer: 20204255.2
(22) Anmeldetag: 28.10.2020
(51) Int. Cl.: F16L 5/04, A62C 3/16, F16L 5/14, H02G 3/22

(54) **VORRICHTUNG ZUR DURCHFÜHRUNG VON LEITUNGEN, ROHREN UND/ODER KABELN DURCH EIN GEBÄUDEBAUTEIL**

(71) Anmelder: Hilti Aktiengesellschaft, 9494 Schaan (LI)
(72) Erfinder: Mordau, Ulf, 86875 Waal (DE)
(74) Vertreter: Hilti Aktiengesellschaft Corporate Intellectual Property

(57) **Zusammenfassung**

Die Erfindung betrifft eine Vorrichtung (1) zur Durchführung von Leitungen (2), Rohren und/oder Kabeln durch einen Gebäudeteil, aufweisend ein Gehäuse (8) mit einer Gehäusewand (9), wobei das Gehäuse (8) einen von der Gehäusewand (9) begrenzten, in Längsrichtung (L) verlaufenden axialen Durchlasskanal (6) aufweist, der an gegenüberliegenden Enden (10, 11) jeweils eine Öffnung (12, 13) aufweist, wobei im Gehäuseinneren (14) wenigstens zwei, jeweils zur Abdichtung des Durchlasskanals (6) ausgeführte Dichtanordnungen (16, 16', 17, 17') vorgesehen sind, die jeweils eine Dichtfläche (24, 25) bilden, wobei die erste Dichtfläche (24) eine Vielzahl von Dichtelementen (22) aufweist, die länglich ausgeführt sind, sich in einer ersten Hauptrichtung (28) erstrecken und zueinander benachbart sind. Die zweite Dichtfläche (25) weist eine Vielzahl von Dichtelementen (22) auf, die länglich ausgeführt sind, sich in einer zweiten Hauptrichtung (38) erstrecken und zueinander benachbart sind, wobei die erste Hauptrichtung (28) und die zweite Hauptrichtung (38) sich bezüglich einer senkrecht zur Längsrichtung (L) stehenden Querebene (E) voneinander unterscheiden.

## Beschreibung

### Technisches Gebiet

Die Erfindung betrifft Vorrichtungen zur Durchführung von Leitungen, Rohren und/oder Kabeln durch Gebäudebauteile, wie z.B. Gebäudewände und dergleichen, und Maßnahmen, um einen Durchtritt von Brandgasen und Rauch durch eine solche Vorrichtung zu verhindern und eine optische Abdichtung durch die Vorrichtung sicherzustellen.

### Technischer Hintergrund

Bekannte Vorrichtungen zur Durchführung von Leitungen, Rohren und/oder Kabeln durch Gebäudebauteile weisen in der Regel Maßnahmen auf, um eine gewünschte Rauchdichtigkeit, Brandgasdichtigkeit und optische Abdichtung bzw. Blickdichtigkeit zu erreichen. Hierzu ist es beispielsweise bekannt, Bürstenvorhänge oder Schlaufenvorhänge einzusetzen. Für die Beurteilung einer regelgerechten Installation spielt das Kriterium der Blickdichtigkeit eine wesentliche Rolle.

Aus der Druckschrift US 8,869,475 B2 ist eine Leitungsdurchführung für ein Bauelement bekannt, das zum Bereitstellen einer Dichtigkeit gegenüber Brandgasen und Rauch einen Lamellenvorhang aus schlaufenförmigen Lamellen aufweist, die sich an eine durchgeführte Leitung anlegen. Jedoch kann insbesondere bei Leitungen mit runden Querschnitten ein Vorhang aus derartigen Lamellen keine gewünschte Dichtigkeit gegen das Durchdringen von Brandgasen und Rauch und auch keine gewünschte Blickdichtigkeit gewährleisten.

Es ist weiterhin bekannt, als Dichtanordnung zwei sich gegenüberstehende Bürstenreihen einzusetzen, deren Haare sich gegebenenfalls durchdringen. Aus der US 10,363,444 A1 ist eine Lösung bekannt, bei der einseitig angeordnete Bürsten in Längsrichtung der Vorrichtung X-förmig zueinander angeordnet sind, so dass sich die eine Bürstenhaare der einen Bürste mit den Bürstenhaaren der anderen Bürste kreuzen. Allerdings ist auch mit dieser Ausführung eine gewünschte Dichtigkeit gegen das Durchdringen von Brandgasen und Rauch und auch eine Blickdichtigkeit bei durch die Vorrichtung geführten Leitungen oder dergleichen nicht in gewünschtem Umfang erzielbar.

Es ist Aufgabe der vorliegenden Erfindung, eine verbesserte Vorrichtung zur Durchführung von Leitungen, Rohren und/oder Kabeln durch einen Gebäudeteil zur Verfügung zu stellen, bei der eine Dichtigkeit der Vorrichtung verbessert ist.

### Offenbarung der Erfindung

Diese Aufgabe wird durch die Vorrichtung zur Durchführung von Leitungen, Rohren und/oder Kabeln gemäß Anspruch 1 gelöst.

Weitere Ausgestaltungen sind in den abhängigen Ansprüchen angegeben.

Gemäß einem Aspekt ist eine Vorrichtung zur Durchführung von Leitungen, Rohren und/oder Kabeln durch einen Gebäudeteil vorgesehen, aufweisend ein Gehäuse mit einer Gehäusewand, wobei das Gehäuse einen von der Gehäusewand begrenzten, in Längsrichtung verlaufenden axialen Durchlasskanal aufweist, der an gegenüberliegenden Enden jeweils eine Öffnung aufweist, wobei im Gehäuseinneren wenigstens zwei jeweils zur Abdichtung des Durchlasskanals ausgeführte Dichtanordnungen vorgesehen sind, die jeweils eine Dichtfläche bilden, wobei die erste Dichtfläche eine Vielzahl erster Dichtelement aufweist, die länglich ausgeführt sind, sich in einer ersten Hauptrichtung erstrecken und zueinander benachbart sind. Es ist vorgesehen, dass die zweite Dichtfläche eine Vielzahl zweiter Dichtelement aufweist, die länglich ausgeführt sind, sich in einer zweiten Hauptrichtung erstrecken und zueinander benachbart sind, wobei die erste Hauptrichtung und die zweite Hauptrichtung sich bezüglich einer senkrecht zur Längsrichtung stehenden Querebene voneinander unterscheiden.

Die vorliegende Lösung hat den Vorteil, dass eine Blickdichtigkeit und insbesondere eine Dichtigkeit gegenüber Brandgasen und Rauch gegenüber bekannten Ausführungen verbessert ist. Bei einer Beladung der Vorrichtung, d. h. einer Durchführung von Leitungen, Rohren, Kabeln oder dergleichen durch die Vorrichtung, stellt sich um die Beladung eine linsenförmige Anordnung der Dichtelemente ein. Durch die sich voneinander unterscheidenden Hauptrichtungen der wenigstens zwei Dichtanordnungen sind die linsenförmigen Anordnungen der Dichtelemente der beiden Dichtanordnungen bei Beladung verdreht zueinander angeordnet, so dass in Längsrichtung der Vorrichtung betrachtet ein von beiden Dichtanordnungen neben der Beladung freigegebener Querschnitt gegenüber bekannten Ausführungen mit Dichtanordnungen ohne verdrehte Hauptrichtungen deutlich reduziert ist. Hierdurch ist die Blickdichtigkeit, also ein bei Betrachtung in Längsrichtung der Vorrichtung freigegebener Querschnitt, der nicht von der Leitung und den Dichtelementen verdeckt ist, verbessert und auch eine verbesserte Dichtigkeit gegenüber Brandgasen und Rauch erzielt.

Unter einer Hauptrichtung wird hierbei diejenige Erstreckungsrichtung der Dichtelemente verstanden, in deren Richtung sich die Dichtelement ohne Beladung der Vorrichtung, d. h. ohne durch die Vorrichtung geführte Leitungen, Kabeln oder dergleichen, von einem ersten Ende zu einem zweiten Ende erstrecken.

Vorzugsweise ist es vorgesehen, dass die Dichtelemente einer Dichtfläche den Querschnitt des Durchlasskanals ohne Beladung der Vorrichtung vollständig verschließen.

Bei einer vorteilhaften Ausführung ist es vorgesehen, dass die erste Hauptrichtung und die zweite Hauptrichtung bezüglich der senkrecht zur Längsrichtung stehenden Querebene einen Winkel zwischen 10 Grad und 170 Grad, vorzugsweise zwischen 40 Grad und 140 Grad, weiter bevorzugt zwischen 70 Grad und 110 Grad und insbesondere im Wesentlichen 90 Grad miteinander einschließen. Je weiter sich der von den Hauptrichtungen eingeschlossene Winkel 90° nähert, umso besser ist die erreichte Blickdichtigkeit, Rauchdichtigkeit und Brandgasdichtigkeit, da sich die bei Beladung der Vorrichtung vorliegenden Linseneffekte hierbei besonders günstig ergänzen.

Bei einer konstruktiv einfachen Ausgestaltung ist die erste Dichtfläche und/oder die zweite Dichtfläche jeweilige im Wesentlichen eine Dichtebene und somit plan ausgeführt.

Eine einfach umsetzbare Ausführung der Vorrichtung sieht vor, dass die erste Dichtebene und/oder die zweite Dichtebene im Wesentlichen senkrecht zur Längsrichtung angeordnet ist.

Es kann vorgesehen sein, dass die erste Dichtebene und/oder die zweite Dichtebene einen Winkel gegenüber Längsrichtung aufweist. Hierdurch ist insbesondere eine Durchführung einer Leitung, eines Rohrs, eines Kabels oder dergleichen durch die Vorrichtung erleichtert.

Besonders bevorzugt sind die erste Dichtebene und die zweite Dichtebene im Wesentlichen parallel zueinander angeordnet, allerdings kann es auch vorgesehen sein, dass die erste Dichtebene mit der zweiten Dichtebene einen Winkel einschließt.

Eine besonders gute Blickdichtigkeit ist erzielbar, wenn zwei Dichtanordnung im Bereich eines Endes des Gehäuses angeordnet sind und ein möglichst geringer Abstand in Längsrichtung der Vorrichtung zwischen den Dichtanordnungen vorliegt. Vorzugsweise sind auch an dem anderen Ende des Gehäuses zwei Dichtanordnungen angeordnet. Die Blickdichtigkeit ist hierdurch weiter verbesserbar.

Wenigstens eine Dichtanordnung kann wenigstens zwei Dichtungsstrukturen aufweisen, wobei wenigstens eine der Dichtungsstrukturen, vorzugsweise beide Dichtungsstrukturen, jeweils eine Vielzahl von Dichtelementen aufweist, die länglich ausgeführt sind, sich in der jeweiligen Hauptrichtung erstrecken und zueinander benachbart sind. Die Dichtelemente sind vorzugsweise elastisch verformbar ausgeführt. Alternativ hierzu können auch Dichtelemente mit insbesondere mehreren über Gelenke miteinander verbundenen Teilbereichen vorgesehen sein.

Eine besonders gute Abdichtung im Bereich einer Dichtanordnung ist erzielbar, wenn die Dichtelemente der beiden Dichtungsstrukturen im Wesentlichen eine gemeinsame Dichtungslinie bilden und die Dichtelemente der einen Dichtungsstruktur vorzugsweise an Dichtelementen der anderen Dichtungsstruktur anliegen. Dichtelemente einer Dichtungsstruktur sind vorzugsweise jeweils einseitig an dem Gehäuse angebunden und weisen in Hauptrichtung insbesondere eine im Wesentlichen vergleichbare Länge auf, wobei von dem Gehäuse abgewandte Enden der Dichtelemente vorzugsweise auf vom Gehäuse abgewandten Enden der Dichtelemente der anderen Dichtungsstruktur aufstehen.

Alternativ hierzu kann es auch vorgesehen sein, dass von den Dichtelementen der beiden Dichtungsstrukturen keine durchgängige Dichtungslinie gebildet sind und beispielsweise Dichtelemente einer Dichtungsstruktur eine voneinander abweichende Länge in der jeweiligen Hauptrichtung aufweisen. Längen der Dichtelemente einer Dichtungsstruktur können beispielsweise alternierend länger und kürzer ausgeführt sein und mit gegengleich ausgeführten Dichtelementen der anderen Dichtungsstruktur zusammenwirken und zumindest in unbeladenem Zustand der Vorrichtung beispielsweise kammartig ineinander greifen.

Es kann auch vorgesehen sein, dass sich Dichtelemente der einen Dichtungsstruktur und Dichtelemente der anderen Dichtungsstruktur durchdringen und somit Dichtelemente der einen Dichtungsstruktur mit Dichtelementen der anderen Dichtungsstruktur in unbeladenem Zustand der Vorrichtung einen Überschneidungsbereich in der Hauptrichtung aufweisen bzw. zumindest bereichsweise nebeneinander angeordnet sind.

Es kann vorgesehen sein, dass Dichtelemente einer Dichtanordnung beidseitig an der Gehäusewand angeordnet sind. Um eine gewünschte Beladung der Vorrichtung zu ermöglichen, sind die Dichtelemente mit einer definierten Elastizität ausgeführt.

Die Dichtelemente können als Lamellen, Bürsten, Borsten, Streifen, Bänder, Schlauchelemente oder dergleichen ausgeführt sein, wobei die Dichtelemente vorzugsweise flexibel und/oder elastisch ausgeführt sind. Eine Breite der Dichtelemente ist dabei vorzugsweise um ein Vielfaches kleiner als eine Länge der Dichtelemente in Hauptrichtung und vorzugsweise auch um ein Vielfaches kleiner als durch die Vorrichtung geführte Leitungen, Rohre, Kabel oder dergleichen.

Die Dichtelemente können mit Metall, Kunststoff, Kautschuk, beispielsweise Gummi oder EPDM, biologischen Materialien, wie beispielsweise Pferdehaaren und/oder Schweineborsten, ausgeführt sein. Vorzugsweise weisen die Dichtelemente Kunststofffasern aus Polypropylen und/oder Polyethylen auf.

Zur Anbindung der Dichtelemente an dem Gehäuse kann wenigstens eine Dichtungsstruktur bzw. wenigstens eine Dichtanordnung wenigstens ein Verbindungselement aufweisen, an dem die jeweiligen Dichtelemente angebunden sind. Das Verbindungselement kann wiederum an der Gehäusewand einsteckbar oder einclipsbar sein. Das wenigstens eine Verbindungselement kann beispielsweise als Schiene ausgeführt sein, die in einer entsprechenden Ausnehmung des Gehäuses einschiebbar ist.

Alternativ hierzu kann es auch vorgesehen sein, dass die Dichtelemente einer Dichtanordnung direkt an die Gehäusewand angebunden sind. Hierzu können beispielsweise mehrere Dichtelemente über einen Clip miteinander verbunden sein und mittels eines Dorns in einem Loch des Gehäuses angeordnet sein.

Das Gehäuse der Vorrichtung weist vorzugsweise einen in Längsrichtung im Wesentlichen konstanten Querschnitt auf, wobei das Gehäuse eine kreisförmige, ovale, rechteckige, quadratische oder mehreckige Querschnittsfläche aufweisen kann.

Um eine einfache Montage der Vorrichtung zu ermöglichen, kann das Gehäuse wenigstens in Längsebene zweiteilig ausgeführt ist, wobei die Teile der Vorrichtung insbesondere reversibel aneinander anordenbar sind. Es kann hierbei vorgesehen sein, dass Dichtanordnungen und/oder Dichtungsstrukturen einem oder beiden Teilen des Gehäuses zugeordnet und an einem oder beiden Teilen des Gehäuses befestigt sind.

Es kann vorgesehen sein, dass wenigstens eine Dichtanordnung und/oder eine Dichtungsstruktur ein intumeszierendes Material aufweist, wobei insbesondere die Dichtelemente mit einem intumeszierenden Material ausgeführt sein können oder ein mit einem intumeszierenden Material ausgeführtes Element aufweisen können. Hierdurch ist auf einfache Weise sicherstellbar, dass der Durchlasskanal in einem Brandfall verschlossen wird.

### Kurzbeschreibung der Zeichnungen

Ausführungsformen werden nachfolgend anhand der beigefügten Zeichnungen näher erläutert. Es zeigen:
- Fig. 1: eine perspektivische Darstellung einer Vorrichtung zur Durchführung von Leitungen, Rohren und/oder Kabeln durch einen Gebäudeteil mit einem Durchlasskanal, wobei die Vorrichtung mit zwei miteinander in Wirkverbindung bringbaren Teilen ausgeführt ist;
- Fig. 2: eine dreidimensionale Ansicht eines Teil der Vorrichtung gemäß Fig. 1, wobei in jedem Endbereich des Durchlasskanals jeweils zwei Dichtanordnungen vorgesehen sind;
- Fig. 3: ein perspektivische Ansicht eines Ausschnitts des Teils der Vorrichtung gemäß Fig. 2;
- Fig. 4: eine dreidimensionale Darstellung des Teils der Vorrichtung gemäß Fig. 3, wobei eine Dichtanordnung nur teilweise ersichtlich ist;
- Fig. 5: eine Draufsicht auf den Teils der Vorrichtung gemäß Fig. 3 in Längsrichtung der Vorrichtung;
- Fig. 6: eine alternative Ausführung einer Vorrichtung zur Durchführung von Leitungen, Rohren und/oder Kabeln durch einen Gebäudeteil;
- Fig. 7: weitere alternative Ausführungen von Vorrichtungen zur Durchführung von Leitungen, Rohren und/oder Kabeln durch einen Gebäudeteil;
- Fig. 8: eine stark vereinfachte Darstellung der Vorrichtung zur Durchführung von Leitungen, Rohren und/oder Kabeln durch einen Gebäudeteil gemäß Fig. 1 bis Fig. 5 mit zwei Dichtanordnungen;
- Fig. 9: eine stark vereinfachte Darstellung einer alternativ ausgeführten Vorrichtung zur Durchführung von Leitungen, Rohren und/oder Kabeln durch einen Gebäudeteil mit zwei Dichtanordnungen;
- Fig. 10: eine schematische Darstellung einer Vorrichtung zur Durchführung von Leitungen, Rohren und/oder Kabeln durch einen Gebäudeteil mit einer durch die Vorrichtung geführten Leitung; und
- Fig. 11: eine schematische Darstellung eines Ausschnitts der Vorrichtung gemäß Fig. 10

### Beschreibung von Ausführungsformen

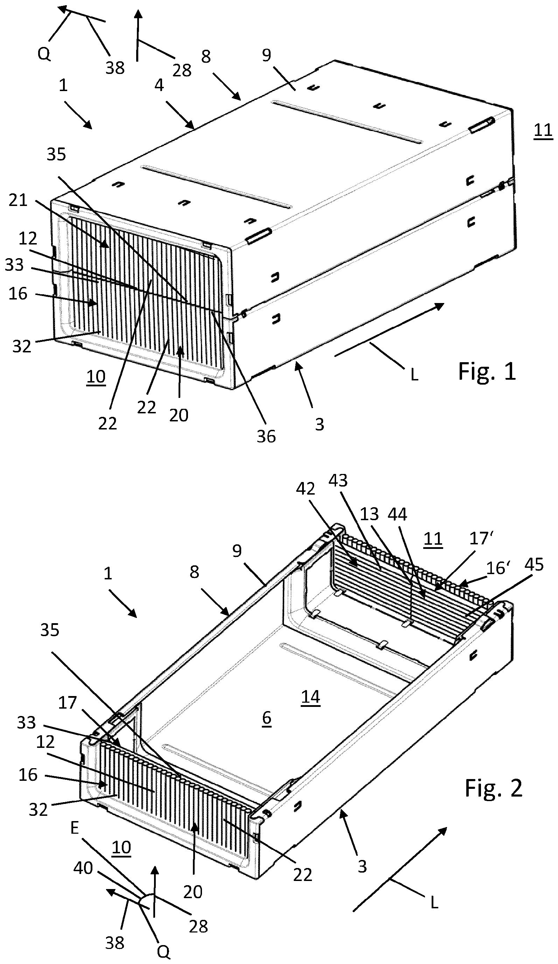

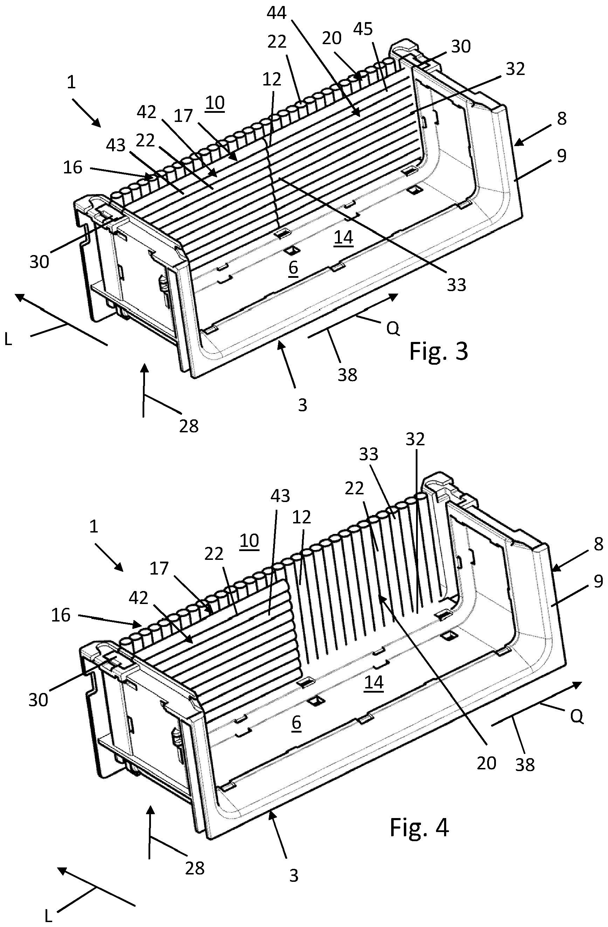

Fig. 1 bis Fig. 5 und Fig. 8 zeigen eine Vorrichtung 1 zur Durchführung von einer oder mehrere Leitungen, Rohre, Kabel oder dergleichen, wie beispielsweise Stromleitungen, Wasserleitungen, Gasleitungen und dergleichen, durch einen Gebäudeteil, wie z. B. eine Gebäudewand, eine Decke und einen Boden.

Die Vorrichtung 1 ist vorliegend mit zwei jeweils einen im Wesentlichen U-förmigen Querschnitt aufweisenden Teilen 3, 4 ausgeführt, die gemäß Fig. 1 lösbar aneinander anordenbar sind. In miteinander verbundenen Zustand der Teile 3, 4 wird von der Vorrichtung 1 ein in Längsrichtung L verlaufender axialer Durchlasskanal 6 gebildet, der sich von einem ersten axialen Ende 10 bis zu einem zweiten axialen Ende 11 erstreckt und zumindest im Bereich der Enden 10, 11 eine für Leitungen oder dergleichen durchgängige Öffnung 12, 13 aufweist.

Bei alternativen Ausführungen kann die Vorrichtung auch einteilig ausgeführt sein.

Die Vorrichtung 1 weist ein Gehäuse 8 mit einer Gehäusewand 9 auf, wobei die Gehäusewand den axialen Durchlasskanal 6 bildet und einen Innenraum 14 der Vorrichtung 1 begrenzt. Das Gehäuse 8 weist vorliegend einen im Wesentlichen rechteckigen Querschnitt auf, kann bei alternativen Ausführungen aber grundsätzlich beliebig gestaltet sein und beispielsweise einen kreisförmigen, ovalen, quadratischen, vieleckigen oder dergleichen Querschnitt aufweisen.

Im Bereich der Enden 10, 11 sind vorliegend jeweils eine erste Dichtanordnung 16 bzw. 16' und jeweils eine zweite Dichtanordnung 17 bzw. 17' angeordnet, wobei die erste Dichtanordnung 16 auf einer dem ersten Ende 10 zugewandten Seite der zweiten Dichtanordnung 17 und die erste Dichtanordnung 16' auf einer dem zweiten Ende 11 zugewandten Seite der zweiten Dichtanordnung 17' angeordnet ist. Die Dichtanordnungen 16 und 16' bzw. 17 und 17' sind jeweils im Wesentlichen baugleich ausgeführt, so dass bezüglich der Ausführung der Dichtanordnungen 16' und 17' auf die folgende Beschreibung der Dichtanordnungen 16 und 17 verwiesen wird.

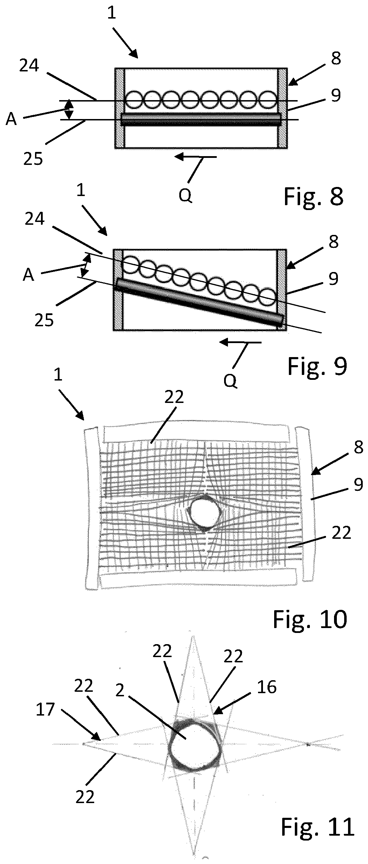

Die erste Dichtanordnung 16 und die zweite Dichtanordnung 17 bilden vorliegend eine erste Dichtebene 24 bzw. eine zweite Dichtebene 25, wobei die Dichtebenen 24 und 25 vorliegend im Wesentlichen senkrecht zur Längsrichtung L in einer Querebene E angeordnet sind. Die erste Dichtebene 24 und die zweite Dichtebene 25 sind im Wesentlichen parallel zueinander angeordnet weisen und in Längsrichtung L einen Abstand A zueinander auf, der vorzugsweise möglichst klein gewählt ist. Die Anordnung der Dichtanordnungen 16 und 17 zueinander ist Fig. 8 zu entnehmen.

Fig. 9 zeigt eine hierzu alternative Ausführung, bei der die ersten Dichtanordnung 16 und die zweite Dichtanordnung 17 ebenfalls im Wesentlichen parallel zueinander angeordnet sind. Allerdings weisen die ersten Dichtebene 24 und die zweite Dichtebene 25 jeweils einen Winkel 48 gegenüber der Querebene E auf, so dass die erste Dichtebene 24 und die zweite Dichtebene 25 nicht senkrecht zu der Längsrichtung L stehen. Hierdurch ist eine vereinfachte Durchführung einer Leitung, eines Rohres, eines Kabels oder dergleichen durch die Vorrichtung 1 erzielt.

Die Dichtanordnung 16 weist vorliegend zwei Dichtungsstrukturen 20 und 21 auf, wobei die erste Dichtungsstruktur 20 an dem ersten Teil 3 der Vorrichtung 1 und die zweite Dichtungsstruktur 21 an dem zweiten Teil 4 der Vorrichtung 1 angeordnet ist. Die Dichtungsstrukturen 20 und 21 sind somit in montiertem Zustand der Vorrichtung 1 an gegenüberliegenden Bereichen der Gehäusewand 9 angeordnet.

In der gezeigten Ausführungsform weisen die Dichtungsstrukturen 20 und 21 im unbeladenen Zustand der Vorrichtung 1, d. h. in einem Zustand, in dem keine Leitung oder dergleichen durch die Vorrichtung 1 geführt ist, einander unmittelbar benachbarte, länglich ausgeführte Dichtelemente 22 auf, die sich im Wesentlichen in einer ersten Hauptrichtung 28, die im Wesentlichen senkrecht zur Längsrichtung L angeordnet ist, erstrecken. Die Dichtelemente 22 weisen vorliegend einen im Wesentlichen kreisförmigen Querschnitt auf, sind vorliegend flexibel und elastisch ausgeführt und weisen eine Erstreckung in der ersten Hauptrichtung 28 auf, die um ein Vielfaches größer als eine Erstreckung quer zur ersten Hauptrichtung 28 ist. Die Erstreckung der Dichtelemente 22 quer zur ersten Hauptrichtung 28 ist zudem vorteilhafterweise um eine Vielfaches kleiner als eine Querschnittserstreckung von einer durch die Vorrichtung 1 geführten Leitung.

Es kann vorgesehen sein, dass die Dichtelemente 22 einen rechteckigen Querschnitt aufweisen, so dass benachbarte Dichtelemente 22 mit ihren Seitenflächen aneinander anliegen, um eine Dichtigkeit auch bezüglich eines Durchtritts zwischen den Dichtelementen 22 zu erreichen.

Die Dichtelemente 22 sind hier als elastische Lamellen mit einer Kunststofffaser aus Polypropylen oder Polyethylen ausgeführt, können bei alternativen Ausführungen aber auch als Bürsten, Borsten, Streifen, Bänder, Schlauchelemente oder dergleichen ausgeführt sein und andere Materialien, wie beispielsweise Metall, Kautschuk, biologische Materialien oder dergleichen aufweisen.

Die Dichtelementen 22 können auch mit Gewebe, Gelege oder Papiermaterialien ausgeführt sein, die flexibel sind, sich gut an einer Mantelfläche einer durch die Vorrichtung 1 geführten Leitung oder dergleichen anlegen können und möglichst eine elastische Kraft auf die Mantelfläche ausüben, um einen möglichst dichten Verschluss im Bereich um die Mantelfläche der Leitung zu gewährleisten. Die Dichtelemente 22 können weiterhin ein intumeszierendes Material aufweisen und beispielsweise mit einem intumeszierenden Material beschichtet sein oder ein intumeszierendes Material umschließen, und insbesondere ein mit intumeszierendem Material versehenes Papier umfassen.

Um eine verbesserte Abdichtung der Dichtanordnung 16 gegenüber einer durch die Vorrichtung 1 geführten Leitung oder dergleichen zu erreichen, können die Dichtelemente 22 mit einer sich in der ersten Hauptrichtung 28 ändernder Elastizität ausgebildet sein, so dass an deren an der Gehäusewand 9 festlegbaren ersten Ende 32 das Material der Dichtelemente 22 eine geringere Elastizität aufweist als an dem zweiten Ende 33 der Dichtelemente 22. Mit anderen Worten nimmt die Steifigkeit der Dichtelemente 22 ausgehend von dem ersten Ende 32 in Richtung des zweiten Endes 33 ab. Somit verformt eine durch die Vorrichtung 1 geführte Leitung oder dergleichen die Dichtelemente 22 im Wesentlichen unmittelbar im Bereich der Mantelfläche der Leitung, wobei der durch die Leitung ausgelenkte Abschnitt der Dichtelemente 22 sich dann besonders günstig an die Mantelfläche der Leitung anlegt. Dies ermöglicht eine besonders gute Abdichtung gegenüber Brandgasen und Rauch und sichert eine gute Blickdichtigkeit.

Ein erstes Ende 32 der Dichtelemente 22 ist jeweils in Wirkverbindung mit der Gehäusewand 9 bringbar, wobei die Dichtelemente 22 hierzu jeweils einzeln direkt an der Gehäusewand 9 angeordnet sein können oder gemeinsam an einem insbesondere schienenförmigen Verbindungselement 30 angeordnet sein können, welches beispielsweise in die Gehäusewand 9 einsteckbar oder einclipbar ist.

Die Dichtelemente 22 erstrecken sich ausgehend von dem ersten Ende 32, das gehäuseseitig festlegbar ist, im Wesentlichen in der ersten Hauptrichtung 28 in Richtung eines zweiten Endes 33. Die jeweiligen dem ersten Ende 32 gegenüberliegenden zweiten Enden 33 der Dichtelemente 22 bilden vorliegend eine gemeinsame, in einer senkrecht zur Längsrichtung L angeordneten Querrichtung Q verlaufende Dichtlinie 35, 36, wobei die zweiten Enden 33 der Dichtelemente 22 der ersten Dichtungsstruktur 20 die erste Dichtlinie 35 und die zweiten Enden 33 der Dichtelemente 22 der zweiten Dichtungsstruktur 21 die zweite Dichtlinie 36 bilden.

Sämtliche Dichtelemente 22 weisen vorliegend eine im Wesentlichen identische Länge in der ersten Hauptrichtung 28 auf, so dass die erste Dichtlinie 35 und die zweite Dichtlinie 36 in unbeladenem Zustand der Vorrichtung 1 in einem etwa mittigen Bereich bezüglich der ersten Hauptrichtung 28 aneinander anliegen bzw. die Dichtelemente 22 der ersten Dichtungsstruktur 20 auf den Dichtelementen 22 der zweiten Dichtungsstruktur 21 aufstehen. Hierdurch kann ein Durchtritt von Brandgasen und Rauch durch die Öffnung 12 effektiv verhindert werden und es ist eine gute Blickdichtigkeit gewährleistet.

Alternativ hierzu kann es auch vorgesehen sein, dass Dichtelemente einer Dichtungsstruktur voneinander abweisende Längen in der Hauptrichtung aufweisen und Dichtelemente der Dichtungsstrukturen einer Dichtanordnung in unbeladenem Zustand der Vorrichtung kammartig ineinandergreifen.

Die zweite Dichtanordnung 17 ist im Wesentlichen vergleichbar zu der ersten Dichtanordnung 16 aufgebaut, wobei im Folgenden lediglich auf die Unterschiede eingegangen wird und ansonsten auf die Ausführungen zur Dichtanordnung 16 verwiesen wird.

Dichtelemente 22 der zweiten Dichtanordnung 17 erstrecken sich in unbeladenem Zustand der Vorrichtung 1 in einer zweiten Hauptrichtung 38, die hier senkrecht zu der Längsrichtung L angeordnet ist und vorliegend im Wesentlichen in Querrichtung Q verläuft.

Als Querrichtung Q wird vorliegend eine durch die Teilung der Vorrichtung 1 definierte, senkrecht zur Längsrichtung L stehende Richtung verstanden.

Die erste Hauptrichtung 28 der ersten Dichtanordnung 16 und die zweite Hauptrichtung 38 der zweiten Dichtanordnung 17 unterscheiden sich bezüglich der senkrecht zur Längsrichtung L stehenden Querebene E voneinander. Die erste Hauptrichtung 28 und die zweite Hauptrichtung 38 schließen vorliegend einen Winkel 40 von im Wesentlichen 90° zueinander ein.

Bei alternativen Ausführungen, insbesondere mit beispielsweise kreisförmigen Gehäusequerschnitten, kann der Winkel 40 auch von 90° abweichen und beispielsweise einen Wert zwischen 10° und 170° aufweisen.

Im Unterschied zu der ersten Dichtanordnung 16 ist eine erste Dichtungsstruktur 42 der zweiten Dichtanordnung 17 zweigeteilt ausgeführt und weist einen ersten Teil 43 und einen nicht näher ersichtlichen zweiten Teil auf. Der erste Teil 43 der ersten Dichtungsstruktur 42 ist in oben näher beschriebener Weise an der Gehäusewand 9 des ersten Teils 3 der Vorrichtung 1 und der zweite Teil der ersten Dichtungsstruktur 42 an der Gehäusewand 9 des zweiten Teils 4 der Vorrichtung 1 angebunden, so dass in montiertem Zustand der Vorrichtung 1 Dichtelemente 22 des ersten Teils 43 der ersten Dichtungsstruktur 42 zusammen mit Dichtelementen 22 des zweiten Teils der ersten Dichtungsstruktur 42 vergleichbar zu der Dichtungsstruktur 20 bzw. 21 ausgeführt sind, allerdings verdreht gegenüber dieser sind.

Ebenso ist eine zweite Dichtungsstruktur 44 der zweiten Dichtanordnung 17 zweigeteilt ausgeführt und weist einen ersten Teil 45 und einen nicht näher ersichtlichen zweiten Teil auf. Der erste Teil 45 der zweiten Dichtungsstruktur 44 ist wiederum in oben näher beschriebener Weise an der Gehäusewand 9 des ersten Teils 3 der Vorrichtung 1 und der zweite Teil der zweiten Dichtungsstruktur 44 an der Gehäusewand 9 des zweiten Teils 4 der Vorrichtung 1 angebunden, so dass in montiertem Zustand der Vorrichtung 1 Dichtelemente 22 des ersten Teils 45 der zweiten Dichtungsstruktur 44 zusammen mit Dichtelementen 22 des zweiten Teils der zweiten Dichtungsstruktur 44 vergleichbar, allerdings verdreht zu den Dichtelementen 22 der Dichtungsstrukturen 20 bzw. 21 der ersten Dichtanordnung 16, angeordnet sind.

Vorzugsweise sind die Dichtelemente 22 der zweiten Dichtanordnung jeweils in bekannter Weise direkt an der Gehäusewand 9 angebunden.

Wird eine Leitung, ein Rohr, ein Kabel oder dergleichen durch die Vorrichtung 1 geführt, werden die Dichtelemente 22 der Dichtungsstrukturen 20 und 21 der ersten Dichtanordnung 16 insbesondere quer zur Längsrichtung L und quer zur ersten Hauptrichtung 28 verlagert. Analog hierzu werden die Dichtelemente 22 der Dichtungsstrukturen 42 und 44 der zweiten Dichtanordnung 17 insbesondere ebenfalls quer zur Längsrichtung L und quer zur zweiten Hauptrichtung 38 verlagert, so dass die Dichtelemente 22 der ersten Dichtanordnung 16 und die Dichtelemente 22 der zweiten Dichtanordnung 17 bei einer durch die Vorrichtung 1 geführten Leitung 2 einen in Fig. 10 und Fig. 11 vereinfacht dargestellten Verlauf einnehmen können.

Durch die Leitung 2 werden die Dichtelemente 22 bzw. die zweiten Enden 33 der Dichtelemente 22 derart umgebogen, dass diese an einer Mantelfläche 5 der Leitung anliegen und hierdurch gegen einen Durchtritt von Brandgasen und Rauch abdichten und zudem eine gewisse Blickdichtigkeit erzielen. Um eine gewünschte Abdichtung zu erreichen, sollte die Breite der Dichtelemente 22 quer zur Längsrichtung L deutlich kleiner sein als der Durchmesser der Leitung 2 bzw. eine Abmessung der Leitung 2 in Querrichtung, vorzugsweise ist eine Breite der Dichtelemente 22 quer zur Längsrichtung L um den Faktor 5, insbesondere um den Faktor 10, kleiner als der Durchmesser der Leitung 2 oder die Abmessung der Leitung 2 in Querrichtung. Die Breite bzw. Dicke der Dichtelemente 22 in Längsrichtung L liegt vorzugsweise zwischen 0,5 mm und 5mm, vorzugsweise zwischen 1 mm und 3 mm.

Wie Fig. 10 und Fig. 11 weiter zu entnehmen ist, weisen die Dichtelemente 22 der jeweiligen Dichtanordnungen 16 und 17 in mit der Leitung 2 beladenem Zustand der Vorrichtung 1 jeweils eine linsenförmige Öffnung auf, wobei die linsenförmigen Öffnungen der Dichtanordnungen 16 und 17 hierdurch die um 90° zueinander verdrehten Hauptrichtungen 28 und 38 entsprechend gegeneinander verdreht sind. Hierdurch ist eine in Längsrichtung L betrachtete freie Querschnittsfläche, d. h. eine Fläche die nicht von der Leitung 2 oder den Dichtelementen 22 der Dichtstrukturen 20 und 21 verdeckt ist, besonders klein.

Dies ist insbesondere Fig. 11 zu entnehmen, bei der Dichtelemente 22 lediglich im Bereich ihrer Anbindung an der Gehäusewand 9 beweglich sind und tangential an der Leitung 2 anliegen. Durch entsprechend elastisch ausgeführte Dichtelemente liegen Dichtelemente insbesondere bogenförmig an der Leitung 2 und die freie Querschnittsfläche ist weiter reduzierbar.

Eine besonders gute Abdichtung gegen Brandgase und Rauch und eine besondere günstige Blickdichtigkeit bzw. optische Abdichtung wird durch die Anordnung der Dichtanordnungen 16' und 17' an dem zweiten Ende 11 der Vorrichtung 1 erzielt. Die Hauptrichtungen 28 bzw. 38 der Dichtanordnungen 16' und 17' entsprechend vorliegend den Hauptrichtungen 28 und 38 der Dichtanordnungen 16 und 17 können gegenüber diesen aber insbesondere bei Vorrichtungen mit beispielsweise kreisförmigen Querschnitt ebenfalls verdreht sein.

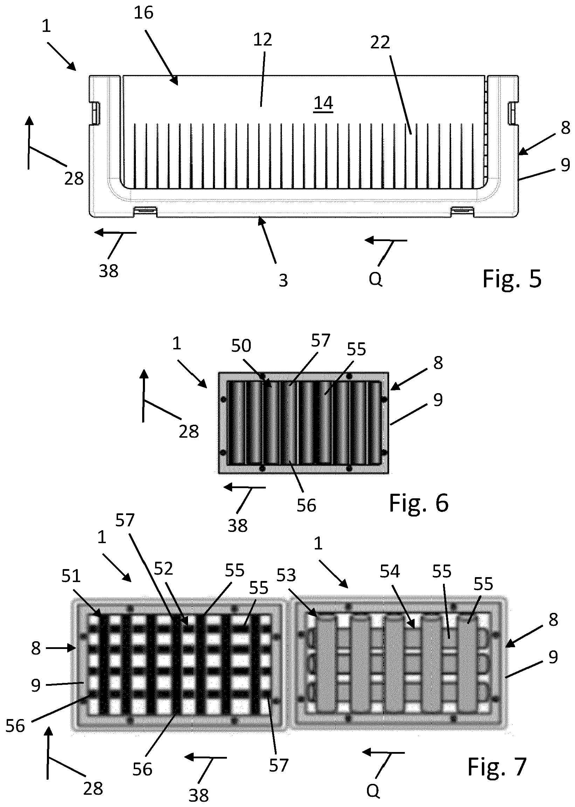

Alternative Ausführungen von Dichtanordnungen sind in Fig. 6 und Fig. 7 gezeigt. Im Unterschied zu der in Fig. 1 bis Fig. 5 gezeigten Ausführung weisen die Dichtanordnungen 50, 51, 52, 53, 54 gemäß Fig. 6 und Fig. 7 jeweils Dichtelemente 55 auf, die sowohl mit ihrem ersten Ende 56 als auch mit ihrem zweiten Ende 57 gehäuseseitig angeordnet sind. Vergleichbar zu der Ausführung gemäß Fig. 1 bis Fig. 5 sind wiederum jeweils zwei Dichtanordnungen 50 bzw. 51 und 52 bzw. 53 und 54 vorgesehen, deren Dichtelemente 55 einen Winkel zueinander von vorliegend insbesondere im Wesentlichen 90° aufweisen.

Mit diesen Ausführungen ist insbesondere eine besondere gute Abdichtung und Blickdichtigkeit bei der Durchführung einer Vielzahl von Leitungen, Kabeln, Rohren oder dergleichen durch die Vorrichtung erzielbar.

## Patentansprüche

1. Vorrichtung (1) zur Durchführung von Leitungen (2), Rohren und/oder Kabeln durch einen Gebäudeteil, aufweisend ein Gehäuse (8) mit einer Gehäusewand (9), wobei das Gehäuse (8) einen von der Gehäusewand (9) begrenzten, in Längsrichtung (L) verlaufenden axialen Durchlasskanal (6) aufweist, der an gegenüberliegenden Enden (10, 11) jeweils eine Öffnung (12, 13) aufweist, wobei im Gehäuseinneren (14) wenigstens zwei, jeweils zur Abdichtung des Durchlasskanals (6) ausgeführte Dichtanordnungen (16, 16', 17, 17'; 50; 51, 52; 53, 54) vorgesehen sind, die jeweils eine Dichtfläche (24, 25) bilden, wobei die erste Dichtfläche (24) eine Vielzahl von Dichtelementen (22; 55) aufweist, die länglich ausgeführt sind, sich in einer ersten Hauptrichtung (28) erstrecken und zueinander benachbart sind, **dadurch gekennzeichnet, dass** die zweite Dichtfläche (25) eine Vielzahl von Dichtelementen (22; 55) aufweist, die länglich ausgeführt sind, sich in einer zweiten Hauptrichtung (38) erstrecken und zueinander benachbart sind, wobei die erste Hauptrichtung (28) und die zweite Hauptrichtung (38) sich bezüglich einer senkrecht zur Längsrichtung (L) stehenden Querebene (E) voneinander unterscheiden.

2. Vorrichtung nach Anspruch 1, **dadurch gekennzeichnet, dass** die erste Hauptrichtung (28) und die zweite Hauptrichtung (38) bezüglich der senkrecht zur Längsrichtung (L) stehenden Querebene (E) einen Winkel (40) zwischen 10 Grad und 170 Grad, vorzugsweise zwischen 40 Grad und 140 Grad, weiter bevorzugt zwischen 70 Grad und 110 Grad und insbesondere im Wesentlichen 90 Grad miteinander einschließen.

3. Vorrichtung nach Anspruch 1 oder 2, **dadurch gekennzeichnet, dass** die erste Dichtfläche (24) und/oder die zweite Dichtfläche (25) jeweilige im Wesentlichen eine Dichtebene ist.

4. Vorrichtung nach Anspruch 3, **dadurch gekennzeichnet, dass** die erste Dichtebene (24) und/oder die zweite Dichtebene (25) im Wesentlichen senkrecht zur Längsrichtung (L) angeordnet ist.

5. Vorrichtung nach Anspruch 3 oder 4, **dadurch gekennzeichnet, dass** die erste Dichtebene (24) und/oder die zweite Dichtebene (25) einen Winkel (48) gegenüber Längsrichtung (L) aufweist.

6. Vorrichtung nach einem der Ansprüche 3 bis 5, **dadurch gekennzeichnet, dass** die erste Dichtebene (24) und die zweite Dichtebene (25) im Wesentlichen parallel zueinander angeordnet sind.

7. Vorrichtung nach einem der vorhergehenden Ansprüche, **dadurch gekennzeichnet, dass** zwei Dichtanordnungen (16, 17 bzw. 16', 17' bzw. 50, 51, 52, 53, 54) im Bereich eines Endes (10 bzw. 11) des Gehäuses (8) angeordnet sind.

8. Vorrichtung nach einem der vorhergehenden Ansprüche, **dadurch gekennzeichnet, dass** wenigstens eine Dichtanordnung (16, 17, 16', 17') wenigstens zwei Dichtungsstrukturen (20, 21, 42, 44) aufweist, wobei wenigstens eine der Dichtungsstrukturen (20, 21 bzw. 42, 44), vorzugsweise beide Dichtungsstrukturen (20, 21 bzw. 42, 44) jeweils eine Vielzahl von Dichtelementen (22) aufweist, die länglich ausgeführt sind, sich in der jeweiligen Hauptrichtung (28 bzw. 38) erstrecken und zueinander benachbart sind.

9. Vorrichtung nach Anspruch 8, **dadurch gekennzeichnet, dass** die Dichtelemente (22) der beiden Dichtungsstrukturen (20, 21 bzw. 42, 44) im Wesentlichen eine gemeinsame Dichtungslinie (35, 36) bilden.

10. Vorrichtung nach einem der vorhergehenden Ansprüche, **dadurch gekennzeichnet, dass** Dichtelemente (55) einer Dichtanordnung (50, 51, 52, 53, 54) beidseitig an der Gehäusewand (9) angeordnet sind.

11. Vorrichtung nach einem der vorhergehenden Ansprüche, **dadurch gekennzeichnet, dass** die Dichtelemente (22; 55) als Lamellen, Bürsten, Borsten, Streifen, Bänder oder Schlauchelemente ausgeführt sind.

12. Vorrichtung nach einem der vorhergehenden Ansprüche, **dadurch gekennzeichnet, dass** die Dichtelemente (22; 55) mit Metall, Kunststoff, Kautschuk und/oder biologischem Material ausgeführt sind.

13. Vorrichtung nach einem der vorhergehenden Ansprüche, **dadurch gekennzeichnet, dass** das Gehäuse (8) eine kreisförmige, ovale, rechteckige oder quadratische Querschnittsfläche aufweist.

14. Vorrichtung nach einem der vorhergehenden Ansprüche, **dadurch gekennzeichnet, dass** das Gehäuse (8) wenigstens in Längsebene zweiteilig (3, 4) ausgeführt ist.

15. Vorrichtung nach einem der vorhergehenden Ansprüche, **dadurch gekennzeichnet, dass** wenigstens eine Dichtanordnung Dichtanordnungen (16, 16', 17, 17'; 50; 51, 52; 53, 54) ein intumeszierendes Material aufweist.
